# EUROPÄISCHE PATENTANMELDUNG

(11) **EP 1 230 846 A1**
(43) Veröffentlichungstag der Anmeldung: **14.08.2002**
(21) Anmeldenummer: 01117350.7
(22) Anmeldetag: 18.07.2001
(51) Int. Cl.: A01K 1/02

(54) **Ferkelschutz-Vorrichtung**

(30) Priorität: 07.02.2001 CH 2162001
(71) Anmelder: Pro Rind AG, 9050 Appenzell (CH)
(72) Erfinder: Breitenmoser, Hans, 9050 Appenzell (CH)
(74) Vertreter: Hefel, Herbert, Dipl.-Ing.

(57) **Zusammenfassung**

Bei einer Ferkelschutz-Vorrichtung, welche einen im Boden (1) zu verankernden, biegeelastischen Stab (2) umfaßt, an dessen freiem Ende ein Körper (3) festgelegt ist, ist der Körper kugelförmig ausgebildet ist.

## Beschreibung

Die Erfindung betrifft eine Ferkelschutz-Vorrichtung, welche einen im Boden zu verankernden, biegeelastischen Stab umfaßt, an dessen freiem Ende ein Körper festgelegt ist.

In der Schweinezucht besteht das Problem, daß Ferkel von Muttersauen erdrückt werden können, insbesondere beim Niederlegen der Muttersau. Es wurden bereits unterschiedliche Vorschläge gemacht, deren Ziele es sind, einen größeren Prozentsatz der Ferkel am Leben zu erhalten.

Um den Ferkeln in den Wandbereichen Zufluchtsmöglichkeiten zu schaffen, wurden Wand-abweisbügel eingesetzt. Diese Abweisbügel verhindern, daß sich die Muttersau beim Niederlegen direkt gegen die Wand fallen läßt, wo das Ferkel keine Ausweichmöglichkeit hat und daher die Gefahr des Erdrücktwerdens besonders hoch ist. Es kommt allerdings auch in anderen Bereichen von Abferkelbuchten zum Erdrücken von Ferkeln, was von den Wandabweisbügeln nicht verhindert werden kann.

Es wurden weiters bereits horizontal angeordnete, vom Boden beabstandete Stangen in Buchten eingebaut, damit die Muttersau nicht überall abliegen kann und die Ferkel durch diese Stangen einen Fluchtweg finden. Der Einbau von solchen Stangen ist allerdings sehr aufwendig und das Ergebnis nicht optimal.

Es ist weiters bereits eine Schweinezuchtbox mit Gitterboden bekannt, in der eine Vorrichtung der eingangs genannten Art eingesetzt wurde. An den Gitterstäben des Bodengitters sind im Bereich von Kreuzungspunkten der Gitterstäbe biegsame Stäbe mit den Gitterstäben verbunden, die vom Gitterboden vertikal nach oben abstehen. Am freien Ende eines solchen Stabes ist jeweils ein hutartiger Körper befestigt, so daß die Vorrichtung insgesamt pilzförmig ausgebildet ist. Solche Vorrichtungen sind in regelmäßigen Abständen voneinander vorgesehen. Diese Vorrichtungen sollen ein kontrolliertes Abliegen der Muttersauen erzwingen, wobei die Ferkel unter diesen pilzartigen Vorrichtungen auch Zuflucht finden können bzw. ihnen ein Fluchtweg freigehalten wird. Durch die Elastizität des Stabes soll ein Verkippen der Vorrichtung ermöglicht werden, wenn ein Ferkel gegen diese gedrückt wird, um das Erdrücken des Ferkels zu verhindern. Allerdings hat es sich gezeigt, daß diese Vorrichtungen unter verschiedenen Umständen nicht optimal wirken. Es sind teilweise Ferkel von der Kante eines herabgebogenen Hutes erdrückt worden. Weiters bietet die Unterseite des Hutes eine Angriffsfläche für den Rüssel einer Muttersau. Muttersauen können mit ihrem Rüssel unter den Hut fahren und den Rüssel nach oben drücken, wobei die pilzförmige Vorrichtung verkippt wird und ein auf der gegenüberliegenden Seite der Vorrichtung sich befindendes Ferkel vom herabkommenden Hutrand verletzt bzw. erdrückt werden kann.

Aufgabe der Erfindung ist es, eine verbesserte Vorrichtung der eingangs genannten Art bereitzustellen. Erfindungsgemäß gelingt dies dadurch, daß der Körper kugelförmig ausgebildet ist.

Durch die kugelförmige Ausbildung des an der Stange angebrachten Körpers wird die Verletzungsgefahr beim Verkippen der Vorrichtung für ein sich unterhalb des herabkommenden Körpers befindendes Ferkel verringert, da keine kantigen Ränder des Körpers vorhanden sind. Weiters wird eine Verkippung der Vorrichtung von einer Muttersau mittels ihres Rüssels verhindert, da sich keine geeignete Angriffsfläche bietet.

Bevorzugterweise ist der kugelförmige Körper ein ausgeschäumter Hohlkörper, wobei die Hohlkugel günstigerweise aus einem Kunststoff mit vorteilhaften Eigenschaften besteht, beispielsweise Polyäthylen. Die Oberfläche des Körpers soll den hygienischen Anforderungen entsprechen und den auftretenden Belastungen standhalten. Zum Füllen des Hohlkörpers kann beispielsweise ein Polyurethanschaum vorgesehen sein. Der Stab soll eine geeignete Biegsamkeit aufweisen, dabei aber ausreichend stabil sein, um ein zu leichtes Verkippen der Vorrichtung zu vermeiden. Eine ausreichende Bruchfestigkeit ist erforderlich. Ein vorteilhaftes Material für den Stab ist beispielsweise Fiberglas.

Weitere Vorteile und Einzelheiten der Erfindung werden im folgenden anhand der beiliegenden Zeichnung erläutert. In dieser zeigen:
- Fig. 1: eine Seitenansicht einer erfindungsgemäßen Vorrichtung und
- Fig. 2: eine schematische Draufsicht auf eine Abferkelbucht eines Stalls.

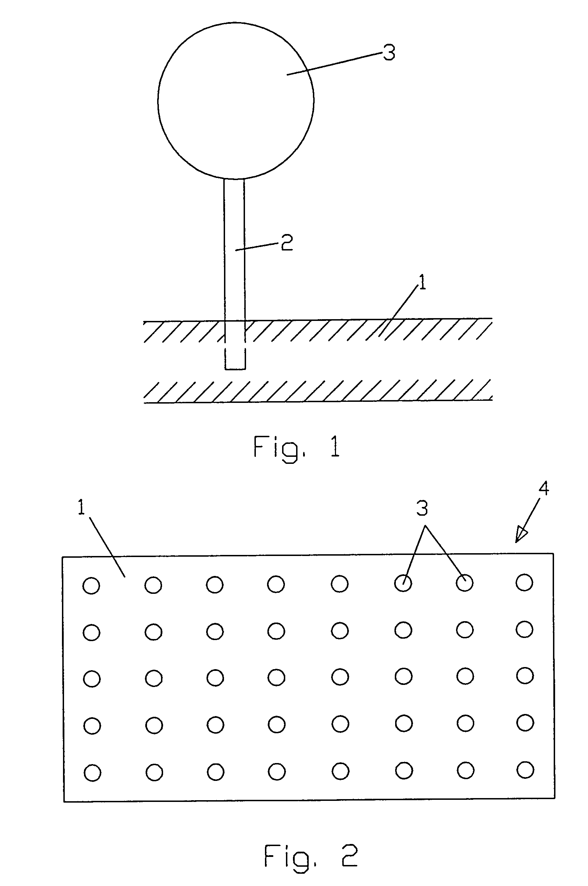

Eine erfindungsgemäße Vorrichtung umfaßt einen im Boden, der in Fig. 1 schematisch angedeutet ist und mit dem Bezugszeichen 1 versehen ist, verankerten Stab 2, an dessen freiem Ende ein kugelförmiger Körper 3 festgelegt ist. Der Stab 2 besteht aus einem biegeelastischem Material, beispielsweise Plexiglas. Der Körper 3 ist bevorzugterweise als ein ausgeschäumter Hohlkörper ausgebildet. Die äußere Schicht des Körpers 3 besteht beispielsweise aus Polyäthylen und der Körper ist mit einem Kunststoffschaum gefüllt. Die gedachte Verlängerung der Längsachse des Stabes 2 geht durch den Kugelmittelpunkt.

Wie aus Fig. 2 ersichtlich ist, werden eine Mehrzahl solcher Vorrichtungen rasterförmig in der Bucht angeordnet. Im Festboden der Bucht, der vorzugsweise als Betonboden ausgebildet ist, werden dazu an den entsprechenden Stellen Bohrlöcher eingebracht, in denen die Stäbe mittels einer Klebemasse, vorzugsweise eines 2-Komponentenklebers, befestigt werden.

Der Stab kann auch aus einem anderen biegeelastischem Material als Fiberglas bestehen. Weiters kann der Stab auch einen Kern aus Fiberglas aufweisen und mit einer geeigneten Ummantelung versehen sein. Der Kugeldurchmesser des Körpers 3 liegt beispielsweise im Bereich von 150 mm und der Abstand der Kugel (an ihrer Unterseite) vom Boden 1 im Bereich von 90 mm. Der Durchmesser des Stabes kann beispielsweise 12 mm betragen.

Die erfindungsgemäße Vorrichtung kann in allen Buchten mit Festböden eingesetzt werden. Die Montage ist überaus einfach. Die Vorrichtung ist tierschutzgerecht und bietet einen großen Freibereich für die Muttersau und ist auch für Gruppensäugen ideal geeignet. Von der hygienischen und arbeitstechnischen Seite her gesehen bietet die erfindungsgemäße Vorrichtung ebenfalls beste Bedingungen.

## Patentansprüche

1. Ferkelschutz-Vorrichtung, welche einen im Boden zu verankernden, biegeelastischen Stab umfaßt, an dessen freiem Ende ein Körper festgelegt ist, **dadurch gekennzeichnet, daß** der Körper (3) kugelförmig ausgebildet ist.

2. Ferkelschutz-Vorrichtung nach Anspruch 1, **dadurch gekennzeichnet, daß** der kugelförmige Körper (3) ein ausgeschäumter Hohlkörper ist.

3. Ferkelschutz-Vorrichtung nach Anspruch 1 oder Anspruch 2, **dadurch gekennzeichnet, daß** der kugelförmige Körper (3) aus Kunststoff, vorzugsweise Polyäthylen besteht.

4. Ferkelschutz-Vorrichtung nach einem der Ansprüche 1 bis 3, **dadurch gekennzeichnet, daß** zur Verankerung des biegeelastischen Stabes im Boden ein Bohrloch im Festboden, der vorzugsweise als Betonboden ausgebildet ist, einer Bucht eines Stalls vorgesehen ist, in welches das Ende des Stabes (2) eingesteckt ist und darin befestigt ist.

5. Ferkelschutz-Vorrichtung nach Anspruch 4, **dadurch gekennzeichnet, daß** der Stab (2) im Bohrloch mittels einer Klebemasse befestigt ist.

6. Ferkelschutz-Vorrichtung nach einem der Ansprüche 1 bis 5, **dadurch gekennzeichnet, daß** die Längsachse des Stabes (2) bzw. deren Verlängerung durch den Kugelmittelpunkt des kugelförmigen Körpers (3) bzw. durch einen Bereich nahe des Kugelmittelpunktes verläuft.

7. Ferkelschutzvorrichtung nach einem der Ansprüche 1 bis 6, **dadurch gekennzeichnet, daß** der Stab (2) aus Fiberglas besteht oder einen Kern aus Fiberglas aufweist.
